# EUROPÄISCHE PATENTSCHRIFT

(11) **EP 2 780 181 B1**
(45) Veröffentlichungstag und Bekanntmachung des Hinweises auf die Patenterteilung: **03.01.2018**
(21) Anmeldenummer: 12778270.4
(22) Anmeldetag: 10.10.2012
(51) Int. Cl.: B60G 9/00, B60G 21/05

(54) **ACHSEINHEIT FÜR NUTZFAHRZEUGE**
AXLE UNIT FOR COMMERCIAL VEHICLES
UNITÉ D'ESSIEU POUR VÉHICULES UTILITAIRES

(30) Priorität: 16.11.2011 DE 102011086480
(43) Veröffentlichungstag der Anmeldung: 24.09.2014
(73) Patentinhaber: SAF-HOLLAND GmbH, 63856 Bessenbach (DE)
(72) Erfinder: DREWES, Olaf, 63743 Aschaffenburg (DE); NABER, Thomas, 48683 Ahaus (DE)
(74) Vertreter: Müller Schupfner & Partner Patent- und Rechtsanwaltspartnerschaft mbB
(86) Internationale Anmeldenummer: PCT/EP2012/069987
(87) Internationale Veröffentlichungsnummer: WO 2013/072141

(56) Entgegenhaltungen:
- DE-A1-102009 040 723
- US-A- 5 778 798
- US-A1- 2010 207 346
- US-A1- 2010 270 766

## Beschreibung

Die vorliegende Erfindung betrifft eine Achseinheit für Nutzfahrzeuge gemäß dem unabhängigen Anspruch 1.

Derartige Achseinheiten für Nutzfahrzeuge sind aus dem Stand der Technik bekannt, wobei bevorzugt die Achse eines Nutzfahrzeuges über ein Lenkerelement und ein Federelement am Rahmen des Nutzfahrzeuges festgelegt ist. Als Weiterentwicklung ist versucht worden das Gewicht und den zum Einbau benötigten Bauraum des Längslenkers zu reduzieren, indem beispielsweise das Federelement unmittelbar auf der starren Achse festgelegt ist. Dabei tritt jedoch insbesondere das Problem auf, dass die Bauhöhe des Achssystems deutlich ansteigt und die am Nutzfahrzeug verbleibende Höhe des Nutzraumes sinkt. Weiterhin tritt bei einer zu flach gehaltenen Auslegung des Achssystems das Problem auf, dass die benötigten Federwege des Federelements nicht weiter erreicht werden können.

Die US-2010/0270766 A1, die als nächstliegender Stand der Technik betracht wird, die US-5,778,798 und US-2010/0207346 A1 betreffen Achseinheiten mit einem Lenkerelement und zwei Achselementen, die voneinander beabstandet sind, wobei weiterhin ein als Luftfeder ausgebildetes Federelement vorgesehen ist.

Die DE 10 2009 040723 A1 betrifft eine Achse eines Nutzfahrzeugs, bei welcher ein linkes und rechtes Radanbindungsteil als Gleichteil fertigbar sind.

Aufgabe der vorliegenden Erfindung ist es also, eine Achseinheit für Nutzfahrzeuge bereitzustellen, die zum einen das Gewicht und den benötigten Bauraum der Achseinheit verringert und zum anderen die benötigten Federwege bei einer gleichzeitig gering gehaltenen Bauhöhe der Achseinheit gewährleistet.

Diese Aufgabe wird gelöst mit einer Achseinheit gemäß dem unabhängigen Anspruch 1. Weitere Vorteile und Merkmale der Erfindung ergeben sich aus den abhängigen Ansprüchen.

Erfindungsgemäß umfasst die Achseinheit für Nutzfahrzeuge ein Lenkerelement, ein erstes Achselement und ein zweites Achselement, wobei das erste Achselement sich im Wesentlichen längs einer Rohrachse erstreckt und an einer ersten Seite des Lenkerelements festlegbar ist, wobei das zweite Achselement zumindest bereichsweise rotationssymmetrisch um eine Stummelachse ausgebildet ist und an einer zweiten Seite des Lenkerelements festlegbar ist, wobei die Rohrachse und die Stummelachse im Bereich des Lenkerelements voneinander beabstandet sind, wobei ein Aufnahmeabschnitt vorgesehen ist, der an zumindest einem der Elemente Achselement und/oder Lenkerelement und/oder zweites Achselement festlegbar ist, um ein Federelement derart zu lagern, dass eine erste Fläche des Federelements zumindest bereichsweise von der Rohrachse oder von der Stummelachse geschnitten wird, wobei das erste Achselement und das zweite Achselement jeweils kraft- und/oder stoffschlüssig am Lenkerelement festlegbar sind, wobei die Stummelachse im Bereich des Lenkerelements um einen vertikalen Abstand von der Rohrachse beabstandet ist, wobei die Stummelachse im Bereich des Lenkerelements um einen horizontalen Abstand von der Rohrachse beabstandet ist, wobei das Verhältnis des horizontalen Abstandes zum vertikalen Abstand im Bereich von 0,5 bis 3 liegt, wobei der Aufnahmeabschnitt (6) als einstückiges Gussteil mit dem Lenkerelement (4) ausgebildet ist.

Das erste Achselement ist dabei bevorzugt eine starre Achse bzw. das Achsrohr eines Nutzfahrzeuges, welches bevorzugt seitlich an einem Lenkerelement festgelegt ist. Auf der jeweils dem ersten Achselement gegenüberliegenden Seite des Lenkerelements ist erfindungsgemäß eine zweites Achselement vorgesehen und am Lenkerelement festgelegt. Dabei ist das zweite Achselement bevorzugt ein Achsstummel, welcher zumindest bereichsweise rotationssymmetrisch um eine Stummelachse ausgebildet ist und insbesondere dafür vorgesehen ist ein Rad des Nutzfahrzeuges drehbar um die Stummelachse zu lagern. Zweckmäßigerweise ist das Lenkerelement an einem ersten distalen Ende schwenkbar am Fahrzeugrahmen des Nutzfahrzeuges festgelegt, wobei dem ersten distalen Ende gegenüberliegend der Aufnahmeabschnitt vorgesehen ist, an welchem ein Federelement zum Eingriff gebracht werden kann, um Schwenkbewegungen des Lenkerelements relativ zum Fahrzeugrahmen des Nutzfahrzeuges abzufedern. Die erste Fläche des Federelements kann besonders bevorzugt die Mantelfläche eines das Federelement umgebenden Zylinders sein, wobei die Zylinderachse insbesondere bevorzugt in im Wesentlichen vertikaler Richtung ausgerichtet ist. Der Aufnahmeabschnitt ist erfindungsgemäß derart am Lenkerelement oder am ersten Achselement oder am zweiten Achselement angeordnet, dass die erste Fläche des Federelements zumindest bereichsweise von zumindest einer der Achsen, Rohr- oder Stummelachse, geschnitten wird. Mit dieser Anordnung der beiden Achselemente und des Aufnahmeabschnitts am Lenkerelement ist die Achseinheit in vorteilhafter Weise sehr kompakt gestaltet, wobei insbesondere die Länge, d. h. die im Wesentlichen horizontale, quer zu der Stummelachse verlaufende Erstreckung, bzw. in Längsrichtung des Nutzfahrzeuges, deutlich reduziert werden kann. Bevorzugt sinkt mit der Reduzierung der Baulänge des Lenkerelements auch dessen Gewicht. Bevorzugt können, indem der Abstand des Aufnahmebereiches von der Stummelachse und damit der Hebelarm für an dem zweiten Achselement und dem Aufnahmeabschnitt angreifende Kräfte gering gehalten wird, die in dem Lenkerelement wirkenden Biegespannungen reduziert werden. Infolgedessen kann mit Vorteil die nötige Querschnittsdicke des Lenkerelements verringert werden, wodurch das Gewicht des Lenkerelements weiter sinkt. Um das Rad des Nutzfahrzeuges in bekannter Weise am Fahrgestell des Nutzfahrzeuges festlegen zu können, ist es zweckmäßig, dass das Lenkerelement derart am Nutzfahrzeug angeordnet ist, dass die zweite Seite, an welcher das zweite Achselement am Lenkerelement festlegbar ist, nach außen bzw. hin zum Rad des Nutzfahrzeuges ausgerichtet ist.

In einer bevorzugten Ausführungsform ist die Stummelachse im Bereich des Lenkerelements um eine vertikalen Abstand von der Rohrachse beabstandet. Mit anderen Worten bedeutet dies, dass das erste Achselement bzw. das Achsrohr bevorzugt vertikal vom zweiten Achselement beabstandet ist. Je nach den geometrischen Gegebenheiten im Bereich des Fahrzeugrahmens kann das Stummelelement bzw. das zweite Achselement oberhalb oder unterhalb relativ zum Achsrohr bzw. zum ersten Achselement vorgesehen sein. Insbesondere bevorzugt um die Bauhöhe der Achseinheit am Nutzfahrzeug zu verringern, kann die Stummelachse oberhalb der Rohrachse angeordnet sein, wobei das Fahrzeugrad bevorzugt höher bezogen auf den Rahmen des Nutzfahrzeuges angeordnet ist als das Achsrohr. Da es üblich ist, dass das Achsrohr an der Unterseite des Nutzfahrzeugrahmens anliegt oder festgelegt ist, kann auf diese Weise bei einem vorgegebenen Raddurchmesser die Unterkante des Fahrzeugrahmens relativ zum Untergrund, auf welchem das Nutzfahrzeug steht bzw. rollt, nach unten versetzt werden. Insbesondere bei einer vorgegebenen Maximalhöhe die von einem Nutzfahrzeug nicht überschritten werden darf, kann auf diese Weise die Maximalhöhe des möglichen Nutzlastvolumens, welches vom Nutzfahrzeug aufgenommen werden kann, gesteigert werden.

Insbesondere bevorzugt ist es, dass die Stummelachse im Bereich des Lenkerelements um einen horizontalen Abstand von der Rohrachse beabstandet ist. Bei dieser Ausführungsform kann insbesondere bevorzugt die Baulänge des Lenkerelements reduziert werden. Da auf diese Weise die Hebelarme der angreifenden Kräfte verringert werden, kann gleichzeitig das Gewicht des Lenkerelements vermindert werden. Um das erste und das zweite Achselement unabhängig voneinander bzw. in aufeinanderfolgender Reihenfolge am Lenkerelement kraftschlüssig festlegen zu können, werden beide Elemente bevorzugt quer zur Stummelachse versetzt zueinander am Lenkerelement angeordnet. Besonders bevorzugt ist es, wenn das erste bzw. das zweite Achselement mit jeweils einem Befestigungsabschnitt in jeweils eine dafür vorgesehene Aussparung des Lenkerelementes eingeführt werden und in der der Einsteckrichtung entgegen gerichteten Richtung beispielsweise ein Dorn eingeführt wird, welcher wiederum ein Aufweiten des jeweiligen ersten Befestigungsabschnittes erreicht. Mit Hilfe der bevorzugten versetzten Anordnung des ersten und des zweiten Achselements zueinander können also beide Elemente in aufeinanderfolgender Reihenfolge in einer bevorzugten Weise kraftschlüssig am Lenkerelement festgelegt werden. Insbesondere bevorzugt weisen das erste und das zweite Achselement in ihren jeweiligen Befestigungsabschnitten die gleichen Geometrie auf, so dass nur eine Umform-Maschine bzw. nur ein Dorn, der zur Umformung mittels einer Presse in den jeweiligen Befestigungsabschnitt eingeführt wird, sowohl für die Festlegung des ersten als auch des zweiten Achselements am Lenkerelement verwendet werden kann. Es können auf diese Weise insbesondere Maschinen- und Werkzeugkosten eingespart werden.

Erfindungsgemäß ist das Verhältnis des horizontalen Abstandes zum vertikalen Abstand im Bereich von 0,5 - 3 und liegt insbesondere bevorzugt bei ca. 1. Mittels der bevorzugten Wahl des Verhältnisses des horizontalen Abstandes zum vertikalen Abstand, kann das Lenkerelement insbesondere die am Lenkerelement festzulegenden Positionen für das erste und das zweite Achselement und den Aufnahmenbereich an die spezifische Geometrie des Fahrzeugrahmens des Nutzfahrzeuges und die zu erwartenden Lasten angepasst werden. Bei gegebenen Lasten auf das Lenkerelement bzw. die Achselemente und den Aufnahmebereich sind auf diese Weise auch Grenzwerte für die maximalen vertikalen bzw. horizontalen Abstände bzw. deren Verhältnis zueinander gegeben. Je größer diese Abstände werden, desto größer sind auch die zu erwartenden Momente bzw. Biegespannungen die auf das Material des Lenkerelements einwirken. Bei einem Verhältnis des horizontalen Abstandes zum vertikalen Abstand von 0 ist also die Stummelachse genau ober- oder unterhalb der Rohrachse angeordnet, wobei insbesondere die Bauhöhe der Achseinheit des Nutzfahrzeuges einstellbar auf einen bevorzugten Wert eingestellt ist. Bei einem Verhältnis des horizontalen Abstandes zum vertikalen Abstand von 3-7, vorzugsweise 5-6 ist also der horizontale Abstand deutlich größer gewählt als der vertikale Abstand der beiden Achsen zueinander, wobei insbesondere bevorzugt das Stummelelement bzw. das zweite Achselement vom ersten distalen Ende des Lenkerelements vor oder hinter dem ersten Achselement bzw. dem Achsrohr angeordnet sein kann. Besonders bevorzugt ist das Verhältnis des horizontalen zum vertikalen Abstand derart gewählt, dass ein günstiger Kraftfluss vom zweiten Achselement bis zum Aufnahmebereich bzw. bis zum ersten Achselement über das Lenkerelement stattfinden kann.

In einer bevorzugten Ausführungsform ist die Stummelachse parallel zur Rohrachse angeordnet. Insbesondere bevorzugt ist es, dass die Rohrachse längs der Erstreckung der starren Achse des Nutzfahrzeuges verläuft, wobei an den jeweiligen Enden dieser starren Achse, bzw. des Achsrohres je ein Lenkerelement angreift. Weiterhin vorgesehen sind zumindest zwei Achsstummelelemente bzw. zweite Achselemente, die an dem jeweiligen Lenkerelement festgelegt sind und der drehbaren Lagerung je eines Rades des Nutzfahrzeuges dienen. Besonders bevorzugt ist es, dass die Drehachse der Fahrzeugräder quer bzw. senkrecht zur Fahrzeuglängsachse verläuft, wobei ebenfalls die Rohrachse quer bzw. senkrecht zur Fahrzeuglängsachse ausgerichtet sein soll. Somit ist insbesondere bevorzugt die Stummelachse parallel zur Rohrachse anzuordnen. In einer alternativ bevorzugten Ausführungsform kann die Rohrachse mit einem Winkel größer Null zur Stummelachse angeordnet sein. Insbesondere bevorzugt kann das Achsrohr aus schräg zueinander stehenden Abschnitten, beispielsweise v-förmig ausgebildet sein. Vorteilhaft kann es beispielsweise sein, die Torsionsbelastung der starren Achse zumindest partiell in Biegespannungen zu wandeln, in dem der Knickpunkt der Achse am Unterboden des Nutzfahrzeuges gelagert, bzw. gestützt wird.

Weiterhin bevorzugt ist es, dass der Aufnahmeabschnitt in vertikaler Richtung beabstandet von der Stummelachse angeordnet ist. Als vertikaler Abstand bzw. vertikale Richtung wird in diesem Zusammenhang die Senkrechte auf den Untergrund auf dem sich das Nutzfahrzeug bewegt angesehen, wobei ein vertikaler Versatz des Aufnahmeabschnitts zur Stummelachse bevorzugt die Bauhöhe der Achseinheit mit angeschlossenem Federelement beeinflusst. Besonders bevorzugt wird der Aufnahmeabschnitt unterhalb oder schräg unterhalb der Stummelachse angeordnet, wobei gleichzeitig auch das am Aufnahmeabschnitt angreifende Federelement bei einem vorgegebenen Abstand zwischen Stummelachse und der Unterkante des Fahrzeugrahmens jeweils längeren Federweg zur Verfügung hat. Auf diese Weise können insbesondere Federelemente, besonders bevorzugt Luftfedern, verwendet werden, welche eine bestimmte Mindestbauhöhe beanspruchen um effektiv eine abfedernde Funktion ausüben zu können. Durch Anordnung des Aufnahmeabschnitts unterhalb der Stummelachse ist also gewährleistet, dass die benötigte Mindestbauhöhe für ein Federelement zur Verfügung steht und gleichzeitig das Rad relativ zum Rahmen des Nutzfahrzeuges möglichst weit oben angeordnet ist, wobei wiederum die zur Verfügung stehende Nutzlasthöhe des Nutzfahrzeuges vergrößert wird.

In einer besonders bevorzugten Ausführungsform ist die Stummelachse in vertikaler Richtung oberhalb des Aufnahmeabschnitts und/oder oberhalb der Rohrachse angeordnet. Besonders bevorzugt ist es, die Stummelachse relativ zum Lenkerelement und dabei bevorzugt auch relativ zu Rohrachse und Aufnahmeabschnitt, möglichst weit oben anzuordnen, um auf diese Weise auch ein an der Stummelachse bzw. an dem zweiten Achselement festzulegendes Fahrzeugrad möglichst hoch relativ zum Rahmen des Nutzfahrzeuges festlegen zu können. Bei einem feststehenden Durchmesser des Fahrzeugrades kann auf diese Weise bevorzugt der Rahmen des Nutzfahrzeuges tiefer bzw. näher am Untergrund auf dem das Nutzfahrzeug sich bewegt, festgelegt werden. Dabei ist es insbesondere bevorzugt, dass sowohl der Aufnahmeabschnitt als auch das erste Achselement bzw. die Rohrachse unterhalb der Stummelachse angeordnet sind.

In einer insbesondere bevorzugten Ausführungsform ist der Aufnahmeabschnitt einstückig mit dem Lenkerelement ausgebildet, wobei das erste Achselement und das zweite Achselement jeweils kraft- und/oder formschlüssig am Lenkerelement festlegbar sind. Zur Vereinfachung der Herstellung der Achseinheit ist es insbesondere bevorzugt, dass das Lenkerelement und der Aufnahmeabschnitt einstückig ausgebildet sind. Dies kann insbesondere bevorzugt durch die Ausbildung des Aufnahmeabschnitts und des Lenkerelements als einstückiges Gussteil erreicht werden. In einem weiteren Verfahrensschnitt können dann das erste und dass zweite Achselement kraft- bzw. stoffschlüssig an dem Verbundteil aus Lenkerelement und Aufnahmeabschnitt festgelegt werden. Eine kraftschlüssige Verbindung zwischen einem der Achselemente und dem Lenkerelement kann insbesondere durch Umformen insbesondere bevorzugt durch Aufweiten eines Rohrabschnitts des ersten oder des zweiten Achselements hergestellt werden, wobei diese kraftschlüssige Verbindung in vorteilhafter Weise durch einen Kleber, bzw. eine adhäsive Schicht unterstützt werden kann. Alternativ bevorzugt ist es, das erste und/oder das zweite Achselement mittels eines Reibschweißverfahrens, insbesondere Rotationsreibschweißen, am Lenkelement festzulegen.

In einer besonders bevorzugten Ausführungsform ist das Federelement ein Luftfederbalg, wobei die erste Fläche des Federelements bevorzugt die Mantelfläche eines den Luftfederbalg umgebenden Zylinders ist. Insbesondere bevorzugt ist der den Luftfederbalg umgebenden Zylinder dabei vertikal ausgerichtet, das heißt die Zylinderachse erstreckt sich quer zur Stummelachse bzw. quer zur Rohrachse im Wesentlichen senkrecht zum Untergrund auf welchem das Nutzfahrzeug steht bzw. rollt. Bei einem ferner bevorzugt tonnenförmig ausgebildeten Luftfederbalg ist der Durchmesser des umgebenden Zylinders bevorzugt gleich dem maximalen Durchmesser des Luftfederbalges, so dass die erste Fläche den Luftfederbalg an seiner dicksten bzw. breitesten Stelle schneidet bzw. tangiert. Alternativ bevorzugt kann das Federelement auch eine Spiralfeder sein, wobei die erste Fläche die Mantelfläche eines durch die Spiralfeder aufgespannten Zylinders ist.

Mit Vorteil weist der Aufnahmeabschnitt zumindest bereichsweise eine ebene Fläche auf, wobei der orthogonale Abstand der Fläche von der Rohrachse derart gewählt ist, dass ein Federelement mit einer Federhöhe am Aufnahmeabschnitt lagerbar ist. Mit anderen Worten entspricht der Abstand des Bereichs am Aufnahmeabschnitt an welchem das Federelement angreift von der Rohrachse, bzw. der Oberseite des ersten Achselements, im Wesentlichen der für das Federelement zur Verfügung stehenden Federhöhe. Dies ist insbesondere dann der Fall, wenn das Federelement und das erste Achselement auf gleicher vertikaler Höhe am Rahmen des Nutzfahrzeuges angreifen. Als orthogonaler Abstand wird insbesondere bevorzugt der Abstand der bereichsweise ebenen Fläche des Aufnahmenabschnitts von der Rohrachse verstanden.

Insbesondere bevorzugt ist das Lenkerelement zumindest im Bereich der Achselemente und des Aufnahmeabschnitts ein entlang einer gekrümmten Austragungslinie ausgetragenes, durchgängiges Profil, wobei die Querschnittsdicke der Profilabschnitte so gewählt ist, dass die Materialspannungen minimiert sind. Als Austragung wird in der Konstruktionslehre eine Erstellung eines dreidimensionalen Körpers aus einem zweidimensionalen Profil, welches entlang einer Bahn imaginär verlagert wird. Der dabei gebildete, bzw. erstellte Körper weist entsprechend in Schnittebenen, welche senkrecht zur Bahn der Austragung, bzw. der Austragungslinie, liegen Querschnittsgeometrien auf, die dem zuvor beschriebenen zweidimensionalen Profil entsprechen. Ein beispielsweise entlang einer S-förmig gekrümmten Bahn ausgetragener Kreisring resultiert in diesem Sinne also beispielsweise in einem S-förmig gekrümmten Rohr. Besonders bevorzugt kann auch das auszutragende, zweidimensionale Profil im Verlauf entlang der Austragungslinie in seiner Größe und/oder seiner Form und/oder seiner Orientierung veränderlich sein. So kann beispielsweise ein kreisförmiges Profil entlang der entlang der Austragungslinie einen fließenden Übergang hin zu einem Profil anderen Querschnitts, beispielsweise Rechteckig oder oval, aufweisen. Insbesondere im Vergleich zu einer durchgehenden Achse für ein Nutzfahrzeug, kann ein entlang einer gekrümmten Linie ausgetragenes, rohrförmiges Profil ähnlich hohe Stabilität bei günstigerer Anordnung des Aufnahmebereiches für eine Luftfeder und/oder des Achsstummels, erreichen. Bevorzugt durch Vermeidung von Kerben und lokalen Materialschwächungen, können die durch die geschwungene Geometrie entstehenden zusätzlichen Biegemomente besser übertragen werden. Dabei kann es insbesondere bevorzugt sein, dass die Austragungslinie zunächst parallel zur Rohrachse, anschließend gekrümmt und schließlich parallel zur Stummelachse verläuft. Die aneinander gereihten, mit anderen Worten "aufgefädelten" Querschnitte der Achselemente und des Lenkerelements weisen dabei entsprechend der zu erwartenden angreifenden Momente und Kräfte größere oder geringere Dicken quer zur Austragungslinie auf. Der gekrümmte Abschnitt der Austragungslinie weist bevorzugt vektorielle Komponenten in vertikaler und besonders bevorzugt auch in horizontaler Richtung auf.

Weitere Vorteile und Merkmale der vorliegenden Erfindung ergeben sich aus der nachfolgenden Beschreibung mit Bezug auf die beigefügten Figuren. Es versteht sich, dass einzelne Merkmale der gezeigten Figuren im Rahmen der Erfindung miteinander kombiniert werden können.

Es zeigen:
- Fig. 1: Eine Seitenansicht einer bevorzugten Ausführungsform der erfindungsgemäßen Achseinheit,
- Fig. 2: eine Draufsicht der in Fig. 1 gezeigten bevorzugten Ausführungsform,
- Fig. 3: eine Seitenansicht einer weiteren bevorzugten Ausführung der Achseinheit, und
- Fig. 4: eine Draufsicht der in Fig. 3 gezeigten bevorzugten Ausführungsform.

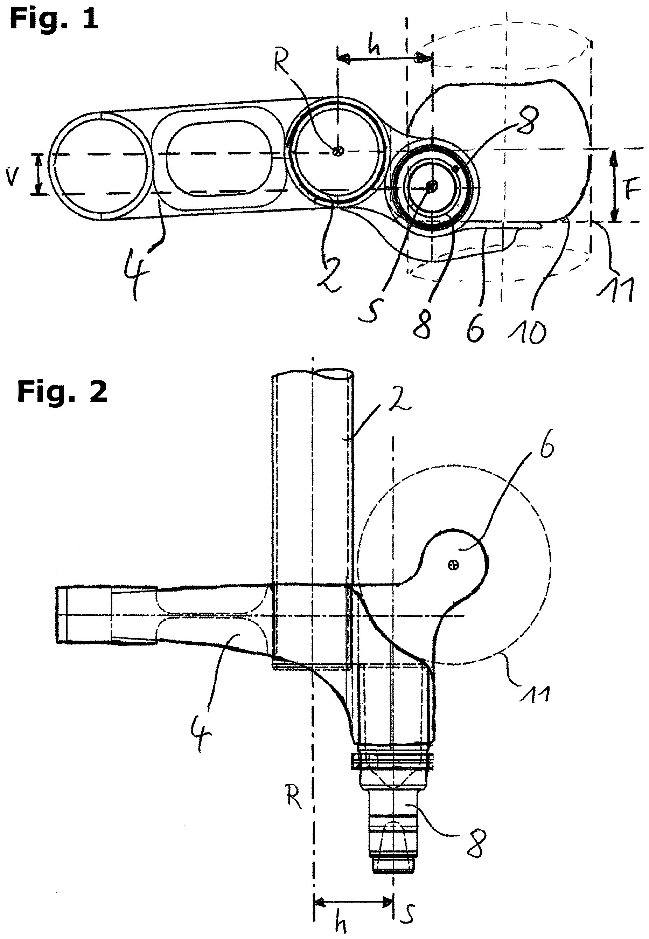

Die in **Fig. 1** gezeigte Achseinheit weist erfindungsgemäß ein Lenkerelement 4, ein erstes Achselement 2 und ein zweites Achselement 8 auf. Wie dargestellt sind das erste und das zweite Achselement 2, 8 bevorzugt kreisförmig ausgelegt bzw. bevorzugt zylinder- oder rohrförmig ausgelegt. Das erste Achselement 2 erstreckt sich dabei im Wesentlichen entlang der Rohrachse R und das zweite Achselement 8 im Wesentlichen entlang der Stummelachse S. Im Bereich des Lenkerelements 4 sind die Rohrachse R und die Stummelachse S um einen vertikalen Abstand v voneinander beabstandet. Weiterhin bevorzugt sind die Rohrachse R und die Stummelachse S ebenfalls um einen horizontalen Abstand h voneinander beabstandet. Je nach den geometrischen Gegebenheiten am Rahmen des Nutzfahrzeuges und nach dem vom Nutzfahrzeug zu transportierenden Nutzlasten kann das Verhältnis von h zu v bevorzugt im Bereich von 0 - 5 vorgesehen werden. An seinem in der Figur links gezeigten distalen Ende weist das Lenkerelement 4 einen Abschnitt auf, welcher der Befestigung des Lenkerelements 4 am Rahmen des Nutzfahrzeuges dient. Dieser Befestigungsabschnitt ist insbesondere bevorzugt hülsenförmig ausgelegt und kann beispielsweise eine Gummibuchse aufnehmen um das Lenkerelement 4 am Rahmen des Nutzfahrzeuges federnd und schwenkbar zu lagern. An seinem gegenüberliegenden, in der Figur rechts gezeigten Ende weist das Lenkerelement 4 einen Aufnahmeabschnitt 6 auf, wobei in der gezeigten bevorzugten Ausführungsform der Aufnahmeabschnitt 6 einstückig mit dem Lenkerelement 4 ausgebildet ist. Alternativ bevorzugt kann der Ausnahmeabschnitt 6 als separates Bauteil ausgeführt sein, welches mittels eines Schweißverfahrens am Lenkerelement 4 festlegbar ist. Der Aufnahmeabschnitt 6 dient neben der Lagerung des Federelements 10 bevorzugt auch der Verstärkung des Lenkerelements 4, d. h. insbesondere in dem Bereich, in welchem das Lenkerelement 4 Materialschwächungen aufweist, nimmt der Aufnahmebereich Kräfte und Momente auf. Weiterhin weist der Aufnahmeabschnitt 6 eine im Wesentlichen ebene Fläche auf, an welcher ein Federelement 10 eingreift bzw. gelagert ist, um Schwenkbewegungen des Lenkerelements 4 relativ zum Fahrzeugrahmen abzufedern. Das Federelement 10 ist insbesondere bevorzugt tonnenförmig ausgebildet, wobei es an seiner dicksten Stelle, d. h. an der Stelle mit der maximalen horizontalen Erstreckung, von einem Zylinder mit einer Mantelfläche 11 geschnitten wird. Deutlich zu erkennen ist die bevorzugte Ausführungsform, dass die Mantelfläche 11 des gedachten Zylinders, welcher das Federelement 10 schneidet, zumindest von einer der Achsen R oder S geschnitten wird. Bei der gezeigten, bevorzugten Ausführung schneidet die Achse S den Zylinder bzw. die Mantelfläche 11 des Zylinders. Weiterhin ist deutlich zu erkennen, dass der Aufnahmeabschnitt 6 an seinem im Wesentlichen ebenen Bereich einen orthogonalen Abstand F zur Rohrachse R aufweist. Der orthogonale Abstand F ist dabei ein Maß für den vertikalen Versatz des Aufnahmeabschnitts 6 relativ zur Rohrachse R bzw. relativ zum Fahrzeugrahmen. Je größer der Abstand F ist, desto größer ist auch die mögliche Federhöhe des Federelements 10.

**Fig. 2** zeigt eine Draufsicht der bereits in Fig. 1 dargestellten bevorzugten Ausführungsform, wobei das erste Achselement 2 sich im Wesentlichen längs einer Rohrachse R erstreckt und das zweite Achseelement 8 einen im Wesentlichen rotationssymmetrisch um eine Stummelachse S ausgebildeten Abschnitt aufweist. Die Achsen R und S sind zueinander versetzt angeordnet, wobei der Abstand in der Figur ist der horizontale Abstand h der beiden Achsen zueinander gezeigt. Dieser Abstand hat Einfluss darauf, wie hoch die auf die beiden Achselemente und den Aufnahmeabschnitt 6 bzw. das Lenkerelement 4 wirkenden Biegemomente ausfallen. Je größer der Abstand h der Rohrachse R zur Stummelachse S, desto größer auch die zu erwartenden maximalen Biegemomente. Weiterhin deutlich zu erkennen ist, dass das Lenkerelement 4 im Bereich zwischen dem ersten Achselement 2 und dem zweiten Achselement 8 bevorzugt eine kraftgerechte bzw. kraftflussgerechte Geometrie aufweist, wobei insbesondere Kerbwirkung durch scharfe Kanten vermindert wird und stattdessen stark gerundete Geometrien eingesetzt werden. Nicht dargestellt in der Figur ist der am Aufnahmeabschnitt 6 eingreifende Luftfederbalg bzw. das Federelement 10, wobei stattdessen die Mantelfläche eines das Federelement 10 umschließenden Zylinders 11 gezeigt ist.

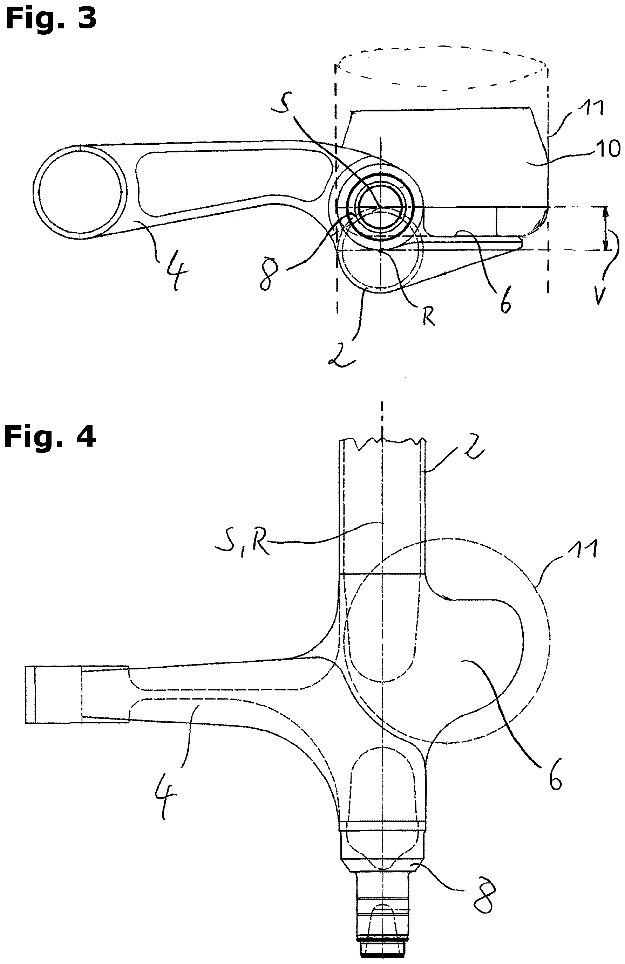

**Fig. 3** zeigt eine Seitenansicht einer bevorzugten Ausführungsform der Achseinheit, wobei die Rohrachse R und die Stummelachse S bevorzugt nur vertikal zueinander um einen Abstand v versetzt sind. Unterhalb des Aufnahmeabschnitts 6 und zum ersten Achselement 2 hin ist ein Bereich mit Materialverstärkung dargestellt, welcher die im Vergleich zu einem durchgehenden Achsrohr vorgenommene Materialschwächung ausgleicht.

**Fig. 4** zeigt die in Fig. 3 dargestellte Ausführungsform der Achseinheit in Draufsicht. Deutlich wird, dass zur bevorzugten Reduzierung der Baulänge des Lenkerelements 4, der Aufnahmeabschnitt 6 fast vollständig in den Bereich der beiden Achselemente 2, 8 hineinragt, wobei in diesem Bereich eine Materialschwächung vorliegt, die bevorzugt an anderer Stelle auszugleichen ist. Dafür sind in den Übergangsbereichen zwischen dem Lenkerelement 4 und dem ersten Achselement 2 und dem Lenkerelement 4 und dem zweiten Achselement 8 mit großen Rundungen mit Rundungsradien vorgesehen. Zum einen wird so der Kraft- und Momentverlauf in der Achseinheit verbessert, zum anderen stellen die Rundungen selbst eine Materialverstärkung dar. Bevorzugt erhöht auch der Aufnahmeabschnitt 6 die Stabilität der Achseinheit.

### Bezugszeichenliste

- 2 -: erstes Achselement
- 8 -: zweites Achselement
- 4 -: Lenkerelement
- 6 -: Aufnahmeabschnitt
- 10 -: Federelement
- 11 -: erste Fläche des Federelements
- R -: Rohrachse
- S -: Stummelachse
- h -: horizontaler Abstand
- v -: vertikaler Abstand

## Patentansprüche

1. Achseinheit für Nutzfahrzeuge, umfassend ein Lenkerelement (4), ein erstes Achselement (2) und ein zweites Achselement (8),
wobei das erste Achselement (2) sich im Wesentlichen längs einer Rohrachse (R) erstreckt und an einer ersten Seite des Lenkerelements (4) festlegbar ist,
wobei das zweite Achselement (8) zumindest bereichsweise rotationssymmetrisch um eine Stummelachse (S) ausgebildet ist und an einer zweiten Seite des Lenkerelements (4) festlegbar ist,
wobei die Rohrachse (R) und die Stummelachse (S) im Bereich des Lenkerelements (4) voneinander beabstandet sind,
wobei ein Aufnahmeabschnitt (6) vorgesehen ist, der an zumindest einem der Elemente Achselement (2) und/oder Lenkerelement (4) und/oder zweites Achselement (8) festlegbar ist, um ein Federelement (10) derart zu lagern, dass eine erste Fläche (11) des Federelements (10) zumindest bereichsweise von der Rohrachse (R) oder von der Stummelachse (S) geschnitten wird, wobei das erste Achselement (2) und das zweite Achselement (8) jeweils kraft- und/oder stoffschlüssig am Lenkerelement (4) festlegbar sind,
wobei die Stummelachse (S) im Bereich des Lenkerelements (4) um einen vertikalen Abstand (v) von der Rohrachse (R) beabstandet ist,
wobei die Stummelachse (S) im Bereich des Lenkerelements (4) um einen horizontalen Abstand (h) von der Rohrachse (R) beabstandet ist,**dadurch gekennzeichnet, dass** das Verhältnis des horizontalen Abstandes (h) zum vertikalen Abstand (v) im Bereich von 0,5 bis 3 liegt,
wobei der Aufnahmeabschnitt (6) als einstückiges Gussteil mit dem Lenkerelement (4) ausgebildet ist.

2. Achseinheit nach Anspruch 1,
wobei das Verhältnis des horizontalen Abstandes (h) zum vertikalen Abstand (v) bei ca. 1 liegt.

3. Achseinheit nach einem der vorhergehenden Ansprüche,
wobei der Aufnahmeabschnitt (6) in vertikaler Richtung beabstandet von der Stummelachse (S) angeordnet ist.

4. Achseinheit nach einem der vorhergehenden Ansprüche,
wobei die Stummelachse (S) in vertikaler Richtung oberhalb des Aufnahmeabschnitts (6) und/oder oberhalb der Rohrachse (R) angeordnet ist.

5. Achseinheit nach einem der vorhergehenden Ansprüche,
wobei das Federelement (10) ein Luftfederbalg ist, und wobei die erste Fläche (11) des Federelements (10) bevorzugt die Mantelfläche eines den Luftfederbalg umgebenden Zylinders ist.

6. Achseinheit nach einem der vorhergehenden Ansprüche,
wobei der Aufnahmeabschnitt (6) zumindest bereichsweise eine ebene Fläche aufweist, und
wobei bevorzugt der orthogonale Abstand der Fläche von der Rohrachse (R) derart gewählt ist, dass ein Federelement (10) mit einer Federhöhe (F) zwischen dem Aufnahmeabschnitt (6) und einem Festlegungspunkt am Nutzfahrzeug einfedern kann.

7. Achseinheit nach einem der vorhergehenden Ansprüche,
wobei das Lenkerelement (4) zumindest im Bereich der Achselemente (2, 8) und des Aufnahmeabschnitts (6) ein entlang einer gekrümmten Austragungslinie ausgetragenes, durchgängiges Profil ist,
wobei die Querschnittsdicke der Profilabschnitte so gewählt ist, dass die Materialspannungen minimiert sind.

## Claims

1. Axle assembly for commercial vehicles, comprising:
a linkage element (4), a first axle element (2) and a second axle element (8),
wherein the first axle element (2) extends essentially along a tube axle (R) and is fixable on a first side of the linkage element (4),
wherein the second axle element (8) is at least partially rotationally symmetric around a stub axle (S) and is fixable at a second side to the linkage element (4),
wherein the tube axle (R) and the stub axle (S) are spaced one from the other in the area of the linkage element (4),
wherein a supporting section (6) is provided, which is fixable at least at the linkage element (4) and/or the first axle element (2) and/or the second axle element (8), so that a suspension element (10) is supported in a way,
that a first surface (11) of the suspension element (10) is intersected at least in parts by at least one of the tube axle (R) or the stub axle (S),
wherein the first axle element (2) and the second axle element (8) are fixable at least one of force-fitted and/or material bonded at the linkage element (4),
wherein the stub axle (S) in the area of the linkage element (4) is spaced from the tube axle (R) by a vertical distance (v),
wherein the stub axle (S) in the area of the linkage element (4) is spaced from the tube axle (R) by a horizontal distance (h), **characterized in that** the ratio of the horizontal distance (h) to the vertical distance (v) is in the range of 0,5 to 3,
wherein the supporting section (6) is configured as a single casted piece along with the linkage element (4).

2. Axle assembly according to claim 1,
wherein the ratio of the horizontal distance (h) to the vertical distance (v) is about 1.

3. Axle assembly according to one of the proceeding claims,
wherein the supporting section (6) is positioned in a vertical distance from the stub axle (S).

4. Axle assembly according to one of the proceeding claims,
wherein the stub axle (S) is positioned vertically above the supporting section (6) and/or the tube axle (R).

5. Axle assembly according to one of the proceeding claims,
wherein the suspension element (10) is a suspension bag,
and wherein the first surface (11) of the suspension element (10) preferably is the outer surface of a cylinder which surrounds the suspension bag.

6. Axle assembly according to one of the proceeding claims,
wherein the supporting section (6) has at least in some parts a level or flat surface, and
wherein the orthogonal distance of the surface to the tube axle is chosen, such that a suspension element (10) having a suspension-height (F) can suspend between the supporting section (6) and a fixing point on the commercial vehicle.

7. Axle assembly according to one of the proceeding claims,
wherein the linkage element (4) is an integrated or continuous profile which supports along a curved line at least in the area of the axle elements (2, 8) and the supporting section (6), and wherein the cross-sectional thickness of the profile sections of the integrated profile is configured to minimize material tensions or material stresses.

## Revendications

1. Unité d'essieu pour véhicules utilitaires, comportant un élément formant bras de direction (4), un premier élément d'essieu (2) et un second élément d'essieu (8),
dans laquelle
le premier élément d'essieu (2) s'étend sensiblement le long d'un axe de tube (R) et est immobilisable sur un premier côté de l'élément de bras de direction (4),
le second élément d'essieu (8) est réalisé au moins localement à symétrie de révolution autour d'un moignon d'axe (S) et est immobilisable sur un second côté de l'élément de bras de direction (4),
l'axe de tube (R) et le moignon d'axe (S) sont espacés l'un de l'autre dans la zone de l'élément de bras de direction (4),
il est prévu un tronçon de réception (6) qui est immobilisable sur l'un au moins des éléments que sont l'élément d'essieu (2) et/ou l'élément de bras de direction (4) et/ou un second élément d'essieu (8), afin de monter un élément formant ressort (10) de telle sorte qu'une première surface (11) de l'élément formant ressort (10) est coupée au moins localement par l'axe de tube (R) ou par le moignon d'axe (S),
le premier élément d'essieu (2) et le second élément d'essieu (8) sont immobilisables chacun par coopération de forces et/ou de matières sur l'élément de bras de direction (4),
le moignon d'axe (S) est espacé de l'axe de tube (R) d'une distance verticale (v) dans la zone de l'élément de bras de direction (4),
le moignon d'axe (S) est espacé de l'axe de tube (R) d'une distance horizontale (h) dans la zone de l'élément de bras de direction (4),
**caractérisée en ce que**
le rapport de la distance horizontale (h) sur la distance verticale (v) est dans la plage de 0,5 à 3,
le tronçon de réception (6) est réalisé sous forme de pièce coulée d'un seul tenant avec l'élément de bras de direction (4).

2. Unité d'essieu selon la revendication 1,
dans laquelle
le rapport de la distance horizontale (h) sur la distance verticale (v) est d'environ 1.

3. Unité d'essieu selon l'une des revendications précédentes,
dans laquelle
le tronçon de réception (6) est agencé à distance du moignon d'axe (S) en direction verticale.

4. Unité d'essieu selon l'une des revendications précédentes,
dans laquelle
le moignon d'axe (S) est agencé au-dessus du tronçon de réception (6) et/ou au-dessus de l'axe de tube (R) en direction verticale.

5. Unité d'essieu selon l'une des revendications précédentes,
dans laquelle
l'élément formant ressort (10) est un soufflet pneumatique, et
la première surface (11) de l'élément formant ressort (10) est de préférence la surface enveloppe d'un cylindre entourant le soufflet pneumatique.

6. Unité d'essieu selon l'une des revendications précédentes,
dans laquelle
le tronçon de réception (6) présente au moins localement une surface plane, et
la distance orthogonale de la surface par rapport à l'axe de tube (R) est choisie de préférence de telle sorte qu'un élément formant ressort (10) peut se débattre sur une hauteur de débattement (F) entre le tronçon de réception (6) et un point d'immobilisation sur le véhicule utilitaire.

7. Unité d'essieu selon l'une des revendications précédentes,
dans laquelle
l'élément de bras de direction (4) est un profil continu en porte-à-faux le long d'une ligne de porte-à-faux recourbée au moins dans la zone des éléments d'essieu (2, 8) et du tronçon de réception (6),
l'épaisseur de section transversale des tronçons de profil est choisie de manière à minimiser les contraintes du matériau.
